# EUROPÄISCHE PATENTSCHRIFT

(11) **EP 1 272 083 B1**
(45) Veröffentlichungstag und Bekanntmachung des Hinweises auf die Patenterteilung: **29.11.2006**
(21) Anmeldenummer: 01911695.3
(22) Anmeldetag: 23.02.2001
(51) Int. Cl.: A47J 43/08

(54) **ELEKTRISCHES HAUSHALTSGERÄT MIT DÄMPFUNGSELEMENTEN**
ELECTRICAL HOUSEHOLD APPLIANCE WITH DAMPING ELEMENTS
APPAREIL MENAGER ELECTRIQUE A ELEMENTS D'AMORTISSEMENT

(30) Priorität: 31.03.2000 DE 10016301
(43) Veröffentlichungstag der Anmeldung: 08.01.2003
(73) Patentinhaber: BSH Bosch und Siemens Hausgeräte GmbH, 81739 München (DE)
(72) Erfinder: ZIBRET, Igor, 3327 Smartno ob Paki (SI); BREZOVNIK, Peter, 3330 Mozirje (SI); PAVLOVIC, Henrik, 3333 Ljubno ob Savinji (SI); PESEC, Jurij, 3301 Petrovce (SI)
(86) Internationale Anmeldenummer: PCT/EP2001/002081
(87) Internationale Veröffentlichungsnummer: WO 2001/074220

(56) Entgegenhaltungen:
- EP-A- 0 317 095
- FR-A- 2 294 360
- FR-A- 2 758 451
- US-A- 5 074 201
- PATENT ABSTRACTS OF JAPAN vol. 1998, no. 11, 30. September 1998 (1998-09-30) -& JP 10 174657 A (FUNAI ELECTRIC CO LTD), 30. Juni 1998 (1998-06-30)

## Beschreibung

Die Erfindung betrifft ein elektrisches Haushaltsgerät, insbesondere Küchenmaschine, mit einem im Gehäuse eingebauten Antriebsmotor, welches Gehäuse aus zumindest einem unteren und oberen Gehäuseteil besteht, wobei die Gehäuseteile mittels Schraubverbindung zusammengehalten sind.

Derartige Geräte wie z.B bekannt aus JP 10174657 weisen ein zumindest aus einem Oberteil und einem Unterteil bestehendes Gehäuse auf. Die beiden Gehäuseteile werden in der Regel mittels Schrauben miteinander verbunden. Hierzu sind an dem einen Gehäuseteil entsprechende Befestigungslöcher vorgesehen, durch die eine Schraube hindurchgeführt und in eine am anderen Gehäuseteil vorgesehene Bohrung eingeschraubt werden kann. Die Gehäuseteile liegen an den Verbindungsstellen unmittelbar aneinander an. Damit können von einem an dem einen Gehäuseteil angeordneten Antriebsmotor ausgehende Vibrationen ungedämpft auf den anderen Gehäuseteil übertragen werden, wodurch es zu einer entsprechend starken Geräuschbildung kommt.

Der Erfindung liegt die Aufgabe zugrunde, ein Haushaltsgerät der eingangs beschriebenen Art so auszubilden, die von dem Antriebsmotor ausgehenden Vibrationen in starkem Maße abgedämpft werden und somit eine starke Geräuschentwicklung weitgehend vermieden wird.

Die Lösung der gestellten Aufgabe gelingt nach der Erfindung dadurch, daß an den Schraubverbindungsstellen Dämpfungselemente vorgesehen sind, durch die eine direkte Berührung des oberen und unteren Gehäuseteiles an den Schraubverbindungsstellen unterbunden ist. Damit können die von dem mit dem einen Gehäuseteil gekoppelten Antriebsmotor ausgehenden Vibrationen nur noch über die Dämpfungselemente auf den anderen Gehäuseteil übertragen werden, wobei durch die Dämpfungselemente eine starke Dämpfung der Vibrationsschwingungen erfolgt und nur noch eine verminderte Geräuschentwicklung möglich ist.

Besonders einfach aber wirkungsvolle Dämpfungselemente sind bereitgestellt, wenn nach einer bevorzugten Ausführungsform des Gegenstandes der Erfindung vorgesehen ist, daß die Dämpfungselemente als elastisch verformbare Pufferteile ausgebildet sind, welche als Zwischenablage zwischen den Gehäuseteilen angeordnet sind.

Eine besonders wirksame Geräuschdämpfung wird dadurch erreicht, daß an dem einen Gehäuseteil Befestigungslöcher und an dem anderen Gehäuseteil mit einer der Aufnahme einer Schraube dienenden Bohrung versehene Zapfen vorgesehen sind, daß die Zapfen an ihrer Außenseite von einem aus elastischem Material bestehenden röhrenförmigen Element umgeben sind und zu beiden Seiten der Befestigungslöcher aus elastischem Material bestehende scheibenförmige Elemente angeordnet sind, wobei auf der einen Seite ein den Zapfen tragender Gehäuseansatz und auf der anderen Seite der Kopf der Schraube an dem jeweiligen scheibenförmigen Element anliegt.

Für das Anbringen der Dämpfungsteile ergibt sich dadurch eine wesentliche Montageerleichterung, daß das röhrenförmige und die scheibenförmigen Elemente in der Form einer Garnrolle als ein einteiliges Elastomerteil ausgebildet sind. Mittels eines derartig ausgebildeten Gummiteiles wird eine direkte Berührung sowohl zwischen den Befestigungslöchern und den in diese einzuführenden Zapfen als auch ein direktes Anliegen der die Zapfen tragenden Gehäuseansätze und der Köpfe der Schrauben an dem die Befestigungslöcher aufweisenden Gehäusebereich vermieden. Damit kann an keiner Stelle der Verbindung eine ungedämpfte Schwingungsübertragung erfolgen.

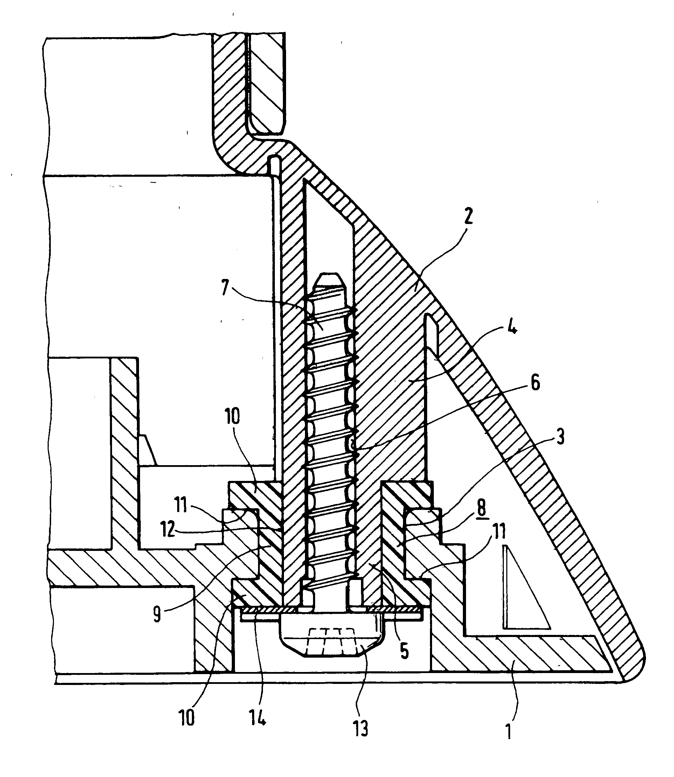

Anhand eines in der Zeichnung dargestellten Ausführungsbeispieles wird die Erfindung nachfolgend noch näher erläutert.

Mit 1 ist das Gehäuseunterteil und mit 2 das Gehäuseoberteil eines elektrischen Haushaltsgerätes, z. B. einer Küchenmaschine oder eines Entsafters bezeichnet. Derartige Geräte besitzen einen elektrischen Antriebsmotor der Vibrationen verursacht, die infolge der Verbindung der beiden Gehäuseteile von dem den Antriebsmotor tragenden Gehäuseteil auf den anderen Gehäuseteil übertragen werden. Dabei kann der andere Gehäuseteil als Resonanzkörper wirken so daß es zu einer starken Geräuschentwicklung kommt.

An den jeweiligen Verbindungsstellen der beiden Gehäuseteile ist an dem Gehäuseunterteil 1 jeweils ein Befestigungsloch 3 vorgesehen. An der mit dem Befestigungsloch 3 kprrespondierenden Stelle des Gehäuseoberteiles 2 ist an einem Gehäuseansatz 4 ein vorstehender Zapfen 5 angeformt. Der Zapfen 5 weist eine Bohrung 6 zur Aufnahme einer Schraube 7 auf.

In jedes Befestigungsloch 3 ist ein Gummielement 8 oder auch aus einem anderen elastischen Material bestehendes Element eingesetzt, welches die Form einer Garnrolle aufweist, d. h. an einem röhrenförmigen Mittelteil 9 ist an dessen beiden Enden jeweils ein gegenüber dem Mittelteil 9 nach radial außen weisender Umlaufrand 10 vorgesehen. Das Gummiteil 8 wird vor dem Zusammenfügen der beiden Gehäuseteile 1 und 2 in das jeweilige Befestigungsloch 3 eingefügt. Wegen der Elastizität des Gummielementes 8 kann der betreffende Umlaufrand 10 entsprechend zusammengedrückt werden so daß er durch das Befestigungsloch 3 hindurchgeführt werden kann. Das Gummielement 8 liegt nach dem Einbringen in das Befestigungsloch 3 an dem das Befestigungsloch 3 enthaltenden Wandbereich 11 des Gehäuseunterteiles 1 an.

Der mit dem Gehäuseoberteil 2 verbundene Zapfen 5 wird in die Mittenöffnung 12 des Gummiteiles 8 eingesteckt und dann die Schraube 7 in die Bohrung 6 eingeschraubt. Dabei kann noch zur Vergrößerung der Anlagefläche des Schraubenkopfes 13 eine Scheibe 14 zwischengefügt werden. Beim Eindrehen der Schraube 7 in die Bohrung 6 werden die beiden Umlaufränder 10 des Gummilementes 8 einerseits zwischen dem betreffenden Gehäuseansatz 4 und der diesem benachbarten Seite des Wandbereiches 11 und andererseits zwischen dem Schraubenkopf 13 bzw. der Scheibe 14 und der dem Schraubenkopf 13 bzw. der Scheibe 14 benachbarten Seite des Wandbereiches 11 zusammengepreßt, wodurch die entsprechende feste Verbindung der beiden Gehäuseteile 1 und 2 bewirkt wird.

Bei dieser derart ausgeführten Verbindung der beiden Gehäuseteile 1 und 2 kommt es an keiner Stelle zu einer direkten Berührung der beiden Gehäuseteile 1 und 2. Auch die mit dem Gehäuseoberteil 2 verbundene Schraube 7 berührt den unteren Gehäuseteil 1 an keiner Stelle, da zwischen dem Schraubenkopf 13 und dem Wandbereich 11 der entsprechende Umlaufrand 10 des Gummielementes 8 liegt. Damit können die von dem am Gehäuseunterteil 1 angeordneten Antriebsmotor ausgehenden Schwingungen nur gedämpft auf das Gehäuseoberteil 2 übertragen werden, so daß die Geräuschentwicklung stark gehemmt wird.

## Patentansprüche

1. Elektrisches Haushaltsgerät, insbesondere Küchenmaschine, mit einem Antriebsmotor, wobei der Antriebsmotor zwischen einem unteren (1) und oberen (2) Gehäuseteil eingebaut ist, wobei diese Gehäuseteile (1 und 2) mittels Schraubverbindung zusammengehalten sind, **dadurch gekennzeichnet, daß** an den Schraubverbindungsstellen (3 und 5) Dämpfungselemente (8) vorgesehen sind, durch die eine direkte Berührung des unteren und oberen Gehäuseteiles (1 und 2) an den Verbindungsstellen (3 und5) unterbunden ist.

2. Haushaltsgerät nach Anspruch 1, **dadurch gekennzeichnet, daß** die Dämpfungselemente (8) als elastisch verformbare Pufferteile ausgebildet sind, welche als Zwischenlage zwischen den Gehäuseteilen (1 und 2) angeordnet sind.

3. Haushaltsgerät nach Anspruch 2, **dadurch gekennzeichnet, daß** an dem einen Gehäuseteil (1) Befestigungslöcher (3) und an dem anderen Gehäuseteil (2) mit einer zur Aufnahme einer Schraube (7) dienenden Bohrung (6) versehene Zapfen (5) vorgesehen sind, daß die Zapfen (5) an ihrer Außenseite von einem aus elastischem Material bestehenden röhrenförmigen Element (9) umgeben sind und zu beiden Seiten der Befestigungslöcher (3) aus elastischem Material bestehende scheibenförmige Elemente (10) angeordnet sind, wobei auf der einen Seite ein den Zapfen (5) tragender Gehäuseansatz (4) und auf der anderen Seite der Kopf (13) der Schraube (7) an dem jeweiligen scheibenförmigen Element (10) anliegt.

4. Haushaltsgerät nach Anspruch 3, **dadurch gekennzeichnet, daß** das röhrenförmige (9) und die scheibenförmigen Elemente (10) in der Form einer Garnrolle als ein einteiliges Elastomer (8) ausgebildet sind.

## Claims

1. Electrical domestic appliance, particularly kitchen machine, with a drive motor, wherein the drive motor is installed between a lower housing part (1) and an upper housing part (2), wherein these housing parts (1 and 2) are held together by means of screw connection, **characterised in that** provided at the screw-connection points (3 and 5) are damping elements (8) by which direct contact of the lower and upper housing part (1 and 2) at the connection points (3 and 5) is prevented.

2. Domestic appliance according to claim 1, **characterised in that** the damping elements (8) are constructed as resiliently deformable buffer parts which are arranged as intermediate pieces between the housing parts (1 and 2).

3. Domestic appliance according to claim 2, **characterised in that** fastening holes (3) are provided at one housing part (1) and spigots (5), which are provided with a bore (6) serving for reception of a screw (7), are provided at the other housing part (2), that the spigots (5) are surrounded at the outer side thereof by a tubular element (9) consisting of resilient material and washer-shaped elements (10) consisting of resilient material are arranged on both sides of the fastening holes (3), wherein a housing projection (4) carrying the spigots (5) bears at one side, and the head (13) of the screw (7) at the other side, against the respective washer-shaped element (10).

4. Domestic appliance according to claim 3, **characterised in that** the tubular elements (9) and the washer-shaped elements (10) are constructed in the form of a cotton reel as an integral elastomeric member (8).

## Revendications

1. Appareil électroménager, notamment robot de cuisine, avec un moteur d'entraînement, , le moteur d'entraînement étant intégré entre un élément de boîtier supérieur (1) et un élément de boîtier inférieur, ces éléments du boîtier (1 et 2) étant maintenus assemblés par liaison à vis, **caractérisé en ce que** des éléments amortisseurs (8) empêchant un contact direct des éléments inférieur et supérieur du boîtier (1 et 2) aux zones de liaison (3 et 5) sont prévus sur les zones de liaison à vis (3 et 5).

2. Appareil ménager selon la revendication 1, **caractérisé en ce que** les éléments amortisseurs (8) sont conçus sous la forme d'éléments tampons élastiquement déformables, qui sont disposés en tant que couche intermédiaire entre les éléments du boîtier (1 et 2).

3. Appareil ménager selon la revendication 2, **caractérisé en ce qu'**on a prévu des trous de fixation (3) sur l'un des éléments du boîtier (1) et sur l'autre élément du boîtier (2) on a prévu des tenons (5) munis d'un alésage (6) destiné à loger une vis (7), **en ce que** sur leur face extérieure, les tenons (5) sont entourés d'un élément tubulaire (9) en un matériau élastique, et sur les deux côtés des trous de fixation (3) on a disposé des éléments en forme de disque (10) en un matériau élastique, un téton du boîtier (4) portant le tenon (5) s'appliquant sur un côté, et la tête (13) de la vis (7) s'appliquant sur l'autre côté de l'élément respectif en forme de disque (10).

4. Appareil ménager selon la revendication 3, **caractérisé en ce que** l'élément tubulaire (9) et les éléments en forme de disque (10) sont conçus sous la forme d'une bobine de fil en tant qu'élastomère monobloc (8).
